# EUROPEAN PATENT APPLICATION

(11) **EP 0 997 745 A1**
(43) Date of publication of application: **03.05.2000**
(21) Application number: 99121340.6
(22) Date of filing: 26.10.1999
(51) Int. Cl.: G01S 3/786

(54) **Bearing integrated system for aircraft**

(30) Priority: 27.10.1998 IT MI982296
(71) Applicant: SAI Servizi Aerei Industriali S.r.l., 20121 Milano (IT)
(72) Inventor: Bidone, Alessandro, 15059 Volpedo (Alessandria) (IT)
(74) Representative: Gervasi, Gemma, Dr.

(57) **Abstract**

An integrated bearing system is disclosed which is able to be installed on board of an aircraft (or on a different vehicle) for environmental monitoring operations, environmental impact evaluations, structural controls of buildings and/or of manufactured devices possibly of big dimensions, search and rescue missions of any type and in whatever environment, etc..

Preferably, the aircraft consists of a light helicopter equipped with bearing means operating in the visible and/or infrared light, means to control and to drive the bearing means, apparatus to process (or at least to pre-process) the bearing data, apparatus to store the processed and/or pre-processed data and apparatus to transmit the latter to a fixed or movable land station to perform a possible further processing operation.

## Description

### Field of the invention

An integrated bearing system is disclosed which is able to be installed on board of an aircraft (or on a different vehicle) for environmental monitoring operations, environmental impact evaluations, structural controls of buildings and/or of manufactured devices, search and rescue missions of any type and in whatever environment, etc..

Preferably, the aircraft consists of a light helicopter equipped with bearing means operating in the visible and/or infrared light, means to control and to drive the bearing means, apparatus to process (or at least to pre-process) the bearing data, apparatus to store the processed and/or pre-processed data and apparatus to transmit the latter to a fixed or movable land station to perform a possible further processing operation.

In the present disclosure, the term "land station" indicates either a fixed or a movable land station placed, for example, on a car or on a ship.

### Background of the invention

The men skilled in the art are well aware of apparatus (which generally belong to the military technology) which are widely utilised by military and paramilitary and/or civil corps (Police, Cost Guard, Firemen, Foresters, civil protection corps, etc.): such apparatus are generally mounted on a vehicle (generally an helicopter or a different aircraft) and comprise at least:
- a plurality of sensors (infrared sensors and/or generally variable focus video cameras) which are placed in a remote-controlled turret which is stabilised by gyroscopic means (and/or functionally equivalent means) and is placed on the outside of the vehicle: if the vehicle is a light helicopter the turret is generally placed under its head, and attached to a vertical rod of one of the skates or to a support of the nacelle.
- storing means able to store the bearing data of the sensors possibly together with further information data which have been inserted by an operator or provided by other on-board apparatus. These data can comprise, for example, time and date of the bearing, position, direction and speed of the vehicle, etc..;
- transmission means able to send to a land station the already stored data or the data to be stored;
- a consolle placed inside the vehicle, allowing the operator to remote control the sensors and the turret, to verify the bearing data on a monitor (which can be part of the same consolle) and to integrate them together with further information data before that the data are recorded and/or sent to the land station, to operate a supervision of the storage of the above said data and/or of their delivery to the land station, etc..

The invention consists of a bearing integrated system able to be installed on an aircraft (preferably a light helicopter) and comprising a plurality of low weight apparatuses showing adequate performances and assembled in order to respect the weight limit values requested by the aircraft equipped with the system. These apparatuses make the system able to perform several operations as environmental monitoring operations, environmental impact evaluations, structural controls buildings and/or of manufactured devices possibly of big dimensions, search and rescue missions of any type and in whatever environment.

### Summary of the invention

The present invention consists of a bearing integrated system for aircraft which comprises at least a combination of: bearing means working in the visible and/or infrared light, a consolle (equipped of at least a keyboard and a monitor) to control and to drive the bearing means, processing means able to process (or pre-process) the bearing data of the bearing means, storing means able to store the data processed (or pre-processed) by the (pre) processing means, and transmission means able to transmit to a land station and/or to another aircraft the processed (or pre-processed) data.

Preferably, the bearing integrated system is installed on an helicopter, particularly on a light helicopter.

### Detailed description of the invention

A bearing integrated system for aircraft according to the invention comprises at least a combination of: bearing means working in the visible and/or infrared light, means to control and to drive the bearing means, processing means able to process (or pre-process) the bearing data of the bearing means, storing means able to store the data processed (or pre-processed) by the (pre) processing means, and transmission means able to transmit to a land station and/or to another aircraft the processed (or pre-processed) data.

Preferably, the bearing integrated system is installed on an helicopter, particularly on a light helicopter.

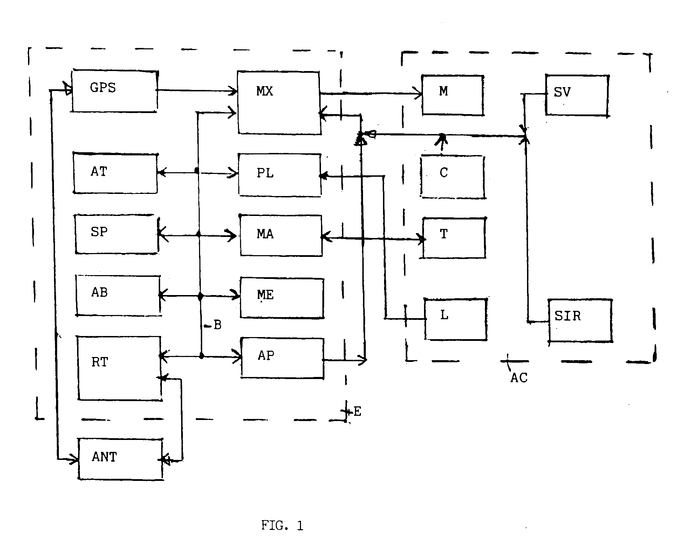

The integrated system will be hereinafter described in greater detail with reference to a non limiting embodiment illustrated in the enclosed drawing. In the drawing the system has been divided (for the sake of a better description and understanding) in two functional units: a block AC to receive and to verify the data, and a block E to process (or pre-process) the received data. This division in two blocks of the bearing integrated system does not correspond ( necessarily) to bearing integrated system which is actually manufactured.

Acquisition and control block AC comprises (in the embodiment illustrated by the drawing) the bearing means comprising at least one or more video sensors SV (generally consisting of preferably variable focus video cameras ) and one or more infrared sensors SIR; the controlling and driving means comprising at least one consolle C to control and/or operate sensors (SV, SIR) and (preferably but not necessarily) a keyboard T; a monitor M and an autopilot, which is not shown in the drawing for the sake of graphic clarity and which can be omitted without outgoing from the scope of the invention.

Sensors (SV, SIR) are generally mounted (singularly or in a mutual combination) on at least one external turret gyroscopically stabilised. The motions of the turret is controlled by the operator through the consolle C; preferably but not necessarily it is possible to integrate the sensors of the turret and at least one independent portable video camera operating in the visible or infrared light. The portable video camera is connected via a cable , via radio (or via other transmission means) to the controlling and driving means and it is not shown in the drawing for the sake of better graphical representation.

The processing (or pre-processing) block E comprises (in the embodiment of the drawing) at least the following functional units, reciprocally connected by at least one "bus" B:
- one video mixer MX which permits to integrate the signal (video and/or in the infrared) coming from the sensors and further visual information data as, for example, time and date, elapsed time from the beginning of the operations, diaphragm and/or focus utilised, polar co-ordinates of the turret in respect to a prefixed reference system;
- one satellite auto positioning apparatus GPS;
- an electronic marker block MA, controlled by the operator through a keyboard T which is part of the controlling and driving means, in order to obtain a "fixed picture" into which it is possible to insert comments and/or notes and then to store or print the obtained "picture";
- a thermal analysis block AT, receiving and processing the data of the infrared sensors SIR of the bearing means (the relevant temperature ranges for the current survey can be selected) and generates a "false colours" picture which permits to appreciate the temperature differences with a prefixed accuracy (preferably but not necessarily in the order of 0.1 Celsius grade);
- a spectrograph SP, able to read through a spectrographic analysis the chemical composition of the target, and which is particularly useful in case of pollution, accidental or fraudulent loss of solid liquid or gaseous (at least possibly) toxic or dangerous substances, etc..
- a block AB able to automatically block the sensors on the target in order to maintain the target in the centre of the analysis area of the sensors also when the operator does not follow the target by the consolle;
- an automatic driving apparatus AP, connected to the auto positioning satellite apparatus GPS and to the autopilot of the vehicle (if any), in order to automatically execute a mission along a predetermined path and following a predetermined set of instructions (height, speed, etc.) or to repeat the path and the instructions of a preceding mission. The data so obtained can be directly and easily compared with the ones obtained by preceding missions in order to get further information about an observed phenomenon (for example the flow of a river or the damage state of a structure).

In a preferred embodiment a bearing integrated system according to the invention further comprises a laser sensor L (which is part of the acquisition and control block AC) and a laser tracking block PL (which is part of the processing block E) which process the data emitted by the laser sensor L and by the automatic positioning apparatus GPS and send to the video mixer MX further visual signals. The laser sensor L, when it is directed on a target, allows the laser tracking block PL to read position, dimensions and height of the target in respect to the ground; said further visual information which are sent to the video mixer MX by the laser tracking block PL consist, for example, of latitude, longitude, height, speed, dimensions of the target and its distance from the aircraft, "tracking" in real time of the displacements of the aircraft, overlapping of the picture taken by the sensors on the topographic map of the land.

In the embodiment illustrated in the drawing the processing (or pre-processing) block E further comprises:
- storing means ME able to store all the data read by the sensors and/or processed by at least one of said functional units during a mission. Such data comprise also the conversations among the members of the aircraft crew and/or between one of the member and the land station and any further information about the mission which is considered of interest;
- the transmission means, consisting of the transreceiver unit RT connected with at least one of said functional units and the antenna assembly ANT, in order to preferably connect the aircraft via radio by means of the antenna assembly with another aircraft and/or with a land station to which the reading data and/or the processed data and any other operation performed on and by the aircraft can be possibly transmitted again.

The above said apparatus and functional units constituting the acquisition and control AC block and the processing (or pre-processing) block E which is part of the bearing integrated system of the invention will not be here descripted because they are available on the market or, anyway, they can be easily made by a skilled operator by modification of commercial apparatus.

In order to reduce the weight of the bearing integrated system (so that it is easier to install the system on a light aircraft) and to increase its efficiency and flexibility the following preferably but not necessary conditions can be considered:
- the connected apparatus lack power units (which are generally a considerable part of the weight) and are connected to a centralised power unit (not shown in the drawing) able to power the bearing integrated system completely equipped;
- control means of all the apparatus have been grouped in one control panel, comprising a keyboard and a monitor, which (preferably but not necessarily) comprises the control and driving means or substitute them;
- the cabling system (indicated in the drawing by the "bus" B) which is installed on the aircraft permits to provide the aircraft with the only apparatus which are time by time required in order to do a specific mission (in this way the weight and the overall dimension of the bearing integrated system mounted on the aircraft is limited) without requiring and modifications and/or integrations to the cabling system: this makes particularly easy, quick and inexpensive to equip the aircraft again in order to perform a mission different from the precedent one.

Without outgoing from the scope of the invention it is possible to place on a helicopter (or on a different aircraft) only the bearing means and the control and driving means of the acquisition and control block AC - the latter being connected via radio (or by different bi-directional transmission means functionally equivalent which are not described here because they are "in se" already known) - with the processing (or pre-processing) means, with the storing means and with the transmission means of the processing block E, block E being placed in a land station or on a different aircraft having loading capacity and dimensions suitable to house and transport the apparatus constituting the processing block E.

The bearing integrated system of the present invention can be advantageously utilised for several applications. The followings can be cited as a non limiting example:
a) environmental controls, possibly performed by (or with the aid of ) control officer and/or specialised operators embarked on the aircraft in order to take observations, to surveying and possibly to intervene to:
   - search and identification of pollution sources;
   - preventing of floods by calculation of the flow of the rivers and surveying of the variations of the riverbeds;
   - search and identification of illegal dumping;
   - remote control of transport means and/or storing means of toxic or dangerous products;
   - search and identification of the most suitable paths for new rail ways, roads and/or highways, and possibly the simulation of the new path in view of an environmental impact study, is requested;
   - search and identification of the most suitable places in order to build big dimension works (dams, long-distance lines, methane pipelines etc..) and possibly the simulation of the new structure in view of an environmental impact study, is requested;
   - surveying of fires (even at the beginning) by the aid a map in order to localise the places where the firemen means and operators have to be directed to optimise the operation;
   - search and identification, possibly during the night time, of people and animals, also to permit a control of hunting;
b) controls on industrial activities. These controls can be made by (or with the aid of) specialised officers embarked on the aircraft and by the transmission to a land station of the information data relating to structural controls of long-distance lines, dams, hydroelectric power plants, railways, methane pipelines, bridges, infrastructures for highway etc. These data can be transmitted on line or processed and then stored on a suitable support;
c) search and rescue operations of missed people, victims of accidental events (slumps, snowslides, cracks, earthquakes, floods, etc.) or victims of criminals (outrages, robberies, etc.) and also operations to prevent crimes and vandalic acts. These operations can be made by (or with the aid of) specialised officers embarked on the aircraft;
d) live or delayed TV takes and/or logistic support to said TV takes. Without outgoing from the scope of the invention it is possible for the man skilled in the art to modify the bearing integrated system of the invention as suggested by the common experience and by the technological developments.

## Claims

1. Bearing integrated system for aircraft, characterised by the fact that it comprises, in combination, at least bearing means operating in the visible and/or infrared light, means able to control and to drive the bearing means, means able to (pre)process the data read by the bearing means, means able to store the (pre)processed data of the (pre)processing means, and transmission means able to transmit the (pre)processed data to a land station and/or to another aircraft.

2. Integrated system according to claim 1 characterised in that, it is installed on an helicopter.

3. Integrated system according to claim 2 characterised in that, it is installed on an light helicopter.

4. Integrated system according to claim 2 or 3 characterised by the fact that only the bearing means and the control and driving means are placed on the helicopter (or an another aircraft), by the fact that the (pre)processing means of the data of the bearing means, the storing means of the (pre)processed data of the (pre)processing means and the transmission means of the (pre)processed data are placed in a land station and/or on another aircraft and by the fact that the bearing means and the control and driving means are connected through bi-directional transmission means to the (pre)processing means, to storing means and to the transmission means placed in a land station and/or on another aircraft.

5. Integrated system according to claim 1 characterised in that the bearing means comprise a combination of at least one visual sensor (SV) and one infrared sensor (SIR).

6. Integrated system according to claim 5 characterised in that the bearing means further comprise at least one portable autonomous, visual or infrared video camera connected to the control and driving means by cable or through transmission means.

7. Integrated system according to claim 1, characterised in that the control and driving means comprise a combination of at least one operator consolle (C) able to control at least the sensors (SV, SIR), one keyboard (T) and one monitor (M).

8. Integrated system according to claims 5 and 7 characterised in that sensors (SV, SIR) are mounted on at least one external turret, the motions of which are controlled by the operator through the consolle (C) of the control and driving means.

9. Integrated system according to claim 1 characterised in that, the (pre)processing means comprise a combination of at least the following functional units:
- one mixer video (MX) intended to integrate the bearing data of the bearing means with further visual indications;
- one satellite auto positioning system (GPS);
- one electronic mark block (MA) controlled by the operator through the control and driving means in order to take a "fixed picture" into which notes and/or comments can be inserted and that can be stored in the storing means;
- one thermal analysis block (AT) able to receive and to process the data of the infrared sensor (SIR) of the bearing means in order to generate a "false colours" picture which permits to appreciate temperature differences of predetermined value;
- one spectrograph (SP) able to read the chemical composition of the target through a spectrographic analysis;
- one automatic blocking apparatus (AB) of the sensor to the target, in order to keep the target always in the centre of the analysis area of the same sensors;
- one automatic driving apparatus (AP) connected at least to the auto positioning satellite apparatus (GPS) in order to automatically perform a mission according to a predetermined path and a predetermined set of instructions, or to perform again the path and the instructions of a preceding mission.

10. Integrated system according to claim 9 characterised in that said functional units are connected through at least one "bus" (B).

11. Integrated system according to claim 9 characterised in that the "false colours" picture generated by the thermal analysis block (AT) permits to appreciate temperature differences of one tenth of Celsius grade.

12. Integrated system according to claim 9 characterised in that the automatic driving apparatus (AP) is also connected to the auto pilot of the aircraft.

13. Integrated system according to claims 1 and 9 characterised in that it further comprises one laser sensor (L) and one laser tracking block (PL), which is part of the (pre)processing means, which is able to process the data of the laser sensor (L) and of the auto positioning satellite apparatus (GPS) and which send to the video mixer (MX) further visual indications.

14. Integrated system according to claim 1 characterised in that the storing means (ME) are able to store at least the data read by the bearing means and/or the data processed by at least one of the functional units of the (pre)processing means.

15. Integrated system according to claim 14 characterised in that the storing means (ME) are able to store conversations among the members of the aircraft crew and/or of one member with a land station.

16. Integrated system according to claim 1 characterised in that the transmission means comprise a combination of at least one transceiver unit (RT) connected to at least one of said functional units of the (pre)processing means and one assembly of antennas (ANT), the transceiver unit (RT) connecting the aircraft to another aircraft or to a land station.

17. Integrated system according to claim 1 characterised in that the bearing means, the control and driving means, the (pre)processing means, the storing means and the transmission means lack of a power unit and in that they are connected to a centralised power unit able to power the bearing integrated system completely equipped.

18. Integrated system according to claim 1 characterised in that the controls of the bearing means, of the (pre)processing means and of the transmission means are grouped in a control panel comprising at least one keyboard and one monitor.

19. Integrated system according to claim 18 characterised in that the control panel comprises the control and driving means.

20. Integrated system according to claim 18 characterised in that the control panel substitutes the control and driving means.

21. Integrated system according to claim 1 characterised in that it comprises a cable system able to permit to provide the integrated system with the only means which are time by time required in order to perform a specific mission without requiring modifications or integration of the cable system.
